# EUROPÄISCHE PATENTSCHRIFT

(11) **EP 3 769 012 B1**
(45) Veröffentlichungstag und Bekanntmachung des Hinweises auf die Patenterteilung: **06.07.2022**
(21) Anmeldenummer: 19713385.3
(22) Anmeldetag: 18.03.2019
(51) Int. Cl.: F24C 15/16, H05B 6/64

(54) **AUSZUGSFÜHRUNG UND MIKROWELLENGARGERÄT ODER INDUSTRIELLER WÄRMEOFEN MIT EINER AUSZUGSFÜHRUNG**
PULL-OUT GUIDE AND MICROWAVE COOKING APPLIANCE OR INDUSTRIAL OVEN HAVING A PULL-OUT GUIDE
GLISSIÈRE TÉLESCOPIQUE ET APPAREIL DE CUISSON À MICRO-ONDES OU FOUR INDUSTRIEL POURVU D'UNE GLISSIÈRE TÉLESCOPIQUE

(30) Priorität: 22.03.2018 DE 102018106787
(43) Veröffentlichungstag der Anmeldung: 27.01.2021
(73) Patentinhaber: Paul Hettich GmbH & Co. KG, 32278 Kirchlengern (DE)
(72) Erfinder: LÖH, Andreas, 31675 Bückeburg (DE); LESSMANN, Johann-Sebastian, 32278 Kirchlengern (DE); TIWISINA, Johannes, 33829 Borgholzhausen (DE); MAIER, Sergej, 49324 Melle (DE); BRAUN, Johann, 32120 Hiddenhausen (DE)
(74) Vertreter: Kleine, Hubertus
(86) Internationale Anmeldenummer: PCT/EP2019/056733
(87) Internationale Veröffentlichungsnummer: WO 2019/179956

(56) Entgegenhaltungen:
- EP-A1- 3 484 247
- WO-A1-2016/012183
- DE-A1- 3 834 721
- DE-A1-102011 054 726
- DE-A1-102012 100 454
- DE-A1-102013 102 948
- DE-A1-102013 102 949
- DE-A1-102013 225 405
- DE-U1-202008 006 302

## Beschreibung

Die Erfindung betrifft eine Auszugsführung für ein Mikrowellengargerät oder einen industriellen Wärmeofen, aufweisend eine Korpusschiene und eine relativ dazu bewegbare Laufschiene zur Ablage eines Trägers, insbesondere eines Gargutträgers, wobei Mittel zur elektrischen Kontaktierung der Laufschiene mit der Korpusschiene vorhanden sind, die mindestens eine Kontaktrolle umfassen, die an der Korpusschiene und/oder der Laufschiene drehbar gelagert ist und die jeweils andere der Schienen kontaktiert und so angeordnet ist, dass sie bei eingefahrener Auszugsführung in die jeweils andere Schiene einfährt. Die Erfindung betrifft weiterhin ein Mikrowellengargerät oder einen industriellen Wärmeofen mit einer derartigen Auszugsführung.

In Gargeräten wie Backöfen haben sich Auszugsführungen etabliert, mit denen ein Gargutträger, beispielsweise ein Backblech, bequem aus einem Garraum des Geräts herausgezogen werden kann, um ihn dann leichter entnehmen zu können oder um eine Garprobe machen zu können, ohne dass Gefahr besteht, dass der Gargutträger verkippt. Eine hoch temperaturfeste Auszugsführung für eine Gargerät ist beispielsweise aus der Druckschrift DE 20 2008 006 302 U1 bekannt.

In Gargeräten, die Gargut ausschließlich oder alternativ zu bzw. in Kombination mit anderen Garmethoden über Mikrowelleneinstrahlung erhitzen bzw. garen, unterliegen alle im Garraum angeordneten Komponenten spezifischen Einschränkungen, die der Mikrowellenstrahlung geschuldet sind. Es gilt zu verhindern, dass Einbauten im Garraum, wozu auch Auszugsführungen zählen, Energie aus der Mikrowellenstrahlung aufnehmen und sich dadurch erwärmen oder die aufgenommene Energie auf unerwünschte Weise ableiten. Eine Erwärmung ist zum einen aus energetischer Sicht unerwünscht und kann zum anderen zur Beschädigung der Auszugsführung oder weiterer Komponenten im Garraum bis hin zu einer Brandgefahr führen. Zudem besteht die Gefahr einer Ausbildung von Plasmaentladungen, die ebenfalls aus energetischer Sicht und auch im Hinblick auf eine Zerstörungswirkung unerwünscht sind. Eine vergleichbare Problematik liegt bei industriellen Wärmeöfen vor, die Mikrowellenstrahlung zu Heizwecken einsetzen.

Aus der Druckschrift DE 4142346 A1 ist eine Auszugsführung für ein Mikrowellengargerät bekannt, bei der die Laufschiene der Auszugsführung von einer Abschirmschiene mit einem geschlossenen Hohlquerschnittsprofil umgeben ist oder bei der die Laufschiene selbst als Abschirmschiene ausgebildet ist. Durch die Abschirmschiene wird die eigentliche Auszugsführung so abgeschirmt, dass die innenliegenden Bestandteile der Auszugsführung für die Mikrowellenstrahlung unzugänglich sind.

Nachteilig an der Ausgestaltung ist es, dass durch die Ausbildung mit einem geschlossenen Hohlquerschnittsprofil eine direkte Unterstützung der Auszugsschiene in dem Bereich, in dem sich die Laufschiene bewegt, nicht möglich ist. Entsprechend kann die Auszugsschiene nur in einem hinteren Stirnbereich fest montiert werden und muss in einem vorderen Bereich geführt werden, beispielsweise durch eine drehbar an einer Seitenwand des Garraums befestigten Führungsrolle. Eine solche Führungsrolle führt zu einem zusätzlichen Platzbedarf der Auszugsführung und lässt eine Gestaltung als Vollauszug / Überauszug nicht zu. Zudem gestaltet sich eine Reinigung einer derartigen frei liegenden Führungsrolle als problematisch.

Die Druckschrift DE 10 2012 100 454 A1 zeigt eine Auszugsführung, bei der ein Wälzkörperkäfig aus einem Metalldrahtgestrick oder -gewirk besteht. Der Wälzkörperkäfig ist so hoch temperaturfest und kann Schienen der Auszugsführung untereinander elektrisch kontaktieren.

Durch eine elektrische Kontaktierung der Schienen untereinander kann verhindert werden, dass eine Bestrahlung der Auszugsführung mit Mikrowellen zum Aufbau von Ladung an der Laufschiene führt. Eine Aufladung einer der Schienen der Auszugsführung gegenüber einer weiteren der Schienen könnte ggf. eine (Plasma-) Entladung zwischen den Schienen zur Folge haben.

Die Druckschriften EP 3 484 247 A1 und DE 10 2011 054 726 A1 betreffen Auszugsführungen, bei denen federnde Kontaktzungen eine elektrische Kontaktierung von Schienen untereinander in zumindest einem eingeschobenen Zustand der Führung bewirken.

Aus der Druckschrift WO 2016/012183 A1 ist eine Auszugsführung für Haushaltsgeräte bekannt, bei der konvex geformte Laufrollen eine Laufschiene führen, die zwei parallele Rundstäbe umfasst. Über die Laufrollen kann ebenfalls eine elektrische Kontaktierung der Laufschiene erfolgen.

Eine ähnliche Anordnung zeigt die Druckschrift DE 10 2013 225 405 A1. Dabei sind zusätzlich Rastelemente vorhanden, durch die eine Verrastung der Laufschiene in bestimmten Positionen erreicht wird. Auch die Schriften DE 10 2013 102 948 A1 und DE 10 2013 102 949 A1 zeigen Auszugsführungen mit Rast- bzw. Sperrmechanismen zwischen zwei Schienen.

Die Druckschrift DE 38 34 721 A1 beschreibt eine Auszugsführung, bei der eine Laufschiene mittels Wälzkörpern an einer Korpusschiene verschiebbar gelagert ist. Ein Abschnitt der Laufschiene ist mit einer federnden Auflaufschräge versehen, die so positioniert ist, dass einer der Wälzkörper kurz vor dem Erreichen der eingefahrenen Stellung in den Bereich der Auflaufschräge gelangt, wodurch ein einfacher Selbsteinzugsmechanismus gebildet wird.

Es ist eine Aufgabe der vorliegenden Erfindung, eine Auszugsführung der eingangs genannten Art zu schaffen, bei der auf einfache Weise eine elektrische Kontaktierung zwischen Schienen und ein Zuhalte- und/oder Selbsteinzugsmechanismus realisiert ist. Es ist eine weitere Aufgabe, ein Mikrowellengargerät und einen industriellen Wärmeofen mit einer derartigen Auszugsführung zu beschreiben.

Diese Aufgabe wird gelöst durch eine Auszugsführung bzw. ein Mikrowellengargerät oder einen industriellen Wärmeofen mit den Merkmalen des jeweiligen unabhängigen Anspruchs. Vorteilhafte Ausgestaltungen und Weiterbildungen sind Gegenstand der abhängigen Ansprüche.

Eine erfindungsgemäße Auszugsführung der eingangs genannten Art zeichnet sich dadurch aus, dass in dem Bereich der anderen Schiene, in die die mindestens eine Kontaktrolle einfährt, mindestens eine Auflaufschräge angeordnet ist, und dass die mindestens eine Kontaktrolle federnd gelagert ist. Durch das Zusammenspiel der federkraftbeaufschlagten Kontaktrolle mit der Anlaufschräge kann so eine Zuhalte- und/oder Selbsteinzugsfunktion realisiert werden.

Bei Annahme einer ebenfalls elektrisch leitenden Montage der Auszugsführung ist die Korpusschiene mit den Seitenwänden des Garraums elektrisch verbunden, so dass insgesamt die Schienen und damit im Wesentlichen alle von außen zugänglichen Metallkomponenten der Auszugsführung auf dem gleichen Potential liegen, wie die Seitenwände des Garraums. Damit werden auch Entladungen von der Auszugsführung zu den Seitenwänden unterbunden. Häufig sind zudem die Seitenwände geerdet. Durch den Potentialausgleich wird entsprechend auch die Auszugsführung geerdet. Die Mikrowellen bilden an geerdeten Komponenten bevorzugt Wellenknoten aus, weshalb im Wesentlichen keine Energie durch die Mikrowellen an die geerdeten Komponenten übertragen wird.

In einer vorteilhaften Ausgestaltung ist die Auszugsführung als Vollauszugsführung ausgebildet und weist eine Mittelschiene auf, die relativ zu der Korpusschiene und der Laufschiene bewegbar ist. Ein aufgelegter (Gargut-) Träger kann durch den Vollauszug so weit aus einem Innenraum des Mikrowellengeräts herausgefahren werden, dass der Träger besonders bequem zugänglich ist. Bevorzugt verbinden die Mittel zur elektrischen Kontaktierung die Laufschiene und/oder die Korpusschiene elektrisch auch mit der Mittelschiene, so dass diese ebenfalls vor einer Aufladung durch Mikrowellenbestrahlung geschützt ist.

In einer weiteren vorteilhaften Ausgestaltung der Auszugsführung stellen die Mittel zur elektrischen Kontaktierung der Korpusschiene, der Laufschiene und ggf. der Mittelschiene eine elektrische Verbindung zumindest in einer eingefahrenen Stellung der Auszugsführung her. Alternativ ist es denkbar, die Mittel zur elektrischen Kontaktierung so auszugestalten, dass eine elektrische Verbindung der Schienen untereinander über den gesamten Auszugsbereich besteht. Da Mikrowellen in der Regel jedoch nur erzeugt werden, wenn der Innenraum durch eine Tür geschlossen ist, ist eine Kontaktierung insbesondere in der eingefahrenen Stellung der Auszugsführung relevant.

Vorteilhaft wird durch die mindestens eine Kontaktrolle eine bei Mikrowellengargeräten häufig gewünschte Zuhaltefunktion, auch Zuhaltung genannt, mit umgesetzt. Diese dient z.B. dazu, einen Abstand zwischen beispielsweise der Tür des Mikrowellengargeräts und der vorderen Stirnabdeckung einzuhalten, wodurch zusätzlich (Funken-) Durchschläge zwischen diesen Elementen verhindert werden.

In einer nicht erfindungsgemäßen Ausgestaltung kann die mindestens eine Kontaktrolle an der Mittelschiene drehbar angeordnet sein und die Korpusschiene und/oder die Laufschiene kontaktieren. Bevorzugt sind zur sicheren Kontaktierung mindestens zwei Kontaktrollen in einer Längsrichtung der Mittelschiene hintereinander an dieser angeordnet. Zum Ausgleich von Höhentoleranzen und um einen noch besseren elektrischen Kontakt zu erzielen, kann die mindestens eine Kontaktrolle mit Spiel behaftet gelagert sein. Bei einer als Vollauszug ausgebildeten Auszugsführung stellen die Kontaktrollen ebenfalls Kontaktelemente dar, die leicht in bestehende Aufbaukonzepte von Auszugsführungen integrierbar sind.

Das mindestens eine Kontaktelement und/oder die mindestens eine Kontaktrolle können dabei ein elektrisch leitendes Material, insbesondere ein Metall und/oder Graphit und/oder einen elektrisch leitenden Kunststoff, aufweisen. Bevorzugte Metalle sind dabei wegen ihrer guten Leitfähigkeit Kupfer, Messing oder Bronze. Als elektrisch leitende Materialen können beispielsweise Polyketon (POK), Polypropylen (PP), thermoplastisches Polyurethan (TPU) und/oder Polyetheretherketon (PEEK) eingesetzt werden, das durch entsprechende Zusätze, in der Regel Kohlenstoffpartikel wie Ruß elektrisch leitfähig gemacht wird.

Die mindestens eine Kontaktrolle können ganz oder teilweise aus den genannten Materialien bestehen. Es ist dabei auch möglich, dass ein Kern, der aus einem elektrisch leitenden oder auch einem nichtleitenden Material bestehen kann, von einem elektrisch leitenden und nachgiebigen Material umgeben ist. Das elektrisch leitende und nachgiebige Material ist beispielsweise ein Gestrick oder Gewirk aus leitenden Fäden oder umfasst leitende Bürsten oder Borsten.

Ein erfindungsgemäßes Mikrowellengargerät oder ein erfindungsgemäßer industrieller Wärmeofen weist mindestens eine derartige Auszugsführung auf. Es ergeben sich die im Zusammenhang mit der Auszugsführung genannten Vorteile.

Die Erfindung wird nachfolgend anhand von Ausführungsbeispielen mithilfe von Figuren näher erläutert. Die Figuren zeigen:
- Fig. 1a-d: eine Gesamtansicht eines ersten nicht erfindungsgemäßen Beispiels einer Auszugsführung in verschiedenen isometrischen Darstellungen;
- Fig. 2a-c: ein weiteres nicht erfindungsgemäßen Beispiel einer Auszugsführung in verschiedenen isometrischen Darstellungen;
- Fig. 3a-c: ein erfindungsgemäßes Ausführungsbeispiel einer Auszugsführung in verschiedenen isometrischen Darstellungen; und
- Fig. 4: ein weiteres erfindungsgemäßes Ausführungsbeispiel einer Auszugsführung in einer isometrischen Darstellung.

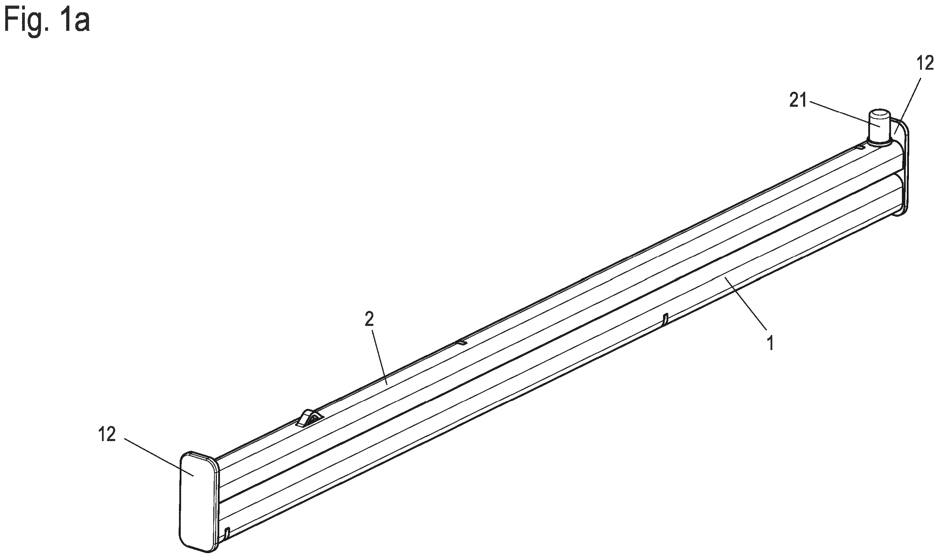

In den Figuren 1a bis 1d ist ein erstes nicht erfindungsgemäßes Beispiel einer Auszugsführung für ein Mikrowellengargerät dargestellt.

Als Mikrowellengargerät ist dabei ein Mikrowellenofen oder ein sogenanntes Kombigargerät zu verstehen, das eine thermische Garfunktion alternativ oder zusätzlich zu einer Mikrowellengarfunktion bereitstellt. In der Regel werden zumindest zwei derartige Auszugsführungen links und rechts in einem Garraum auf gleicher Höhe eingesetzt, um einen Gargutträger, z.B. ein Backblech oder ein Gitter, auflegen und horizontal aus dem Garraum führen zu können. Gegebenenfalls können derartige Auszugsführungen in mehreren Ebenen übereinander angeordnet sein. Es ist jedoch auch denkbar, eine erfindungsgemäße Auszugsführung in einem industriellen Wärmeofen einzusetzen, z.B. im Bereich der Erwärmung oder Vernetzung von Kunststoffen.

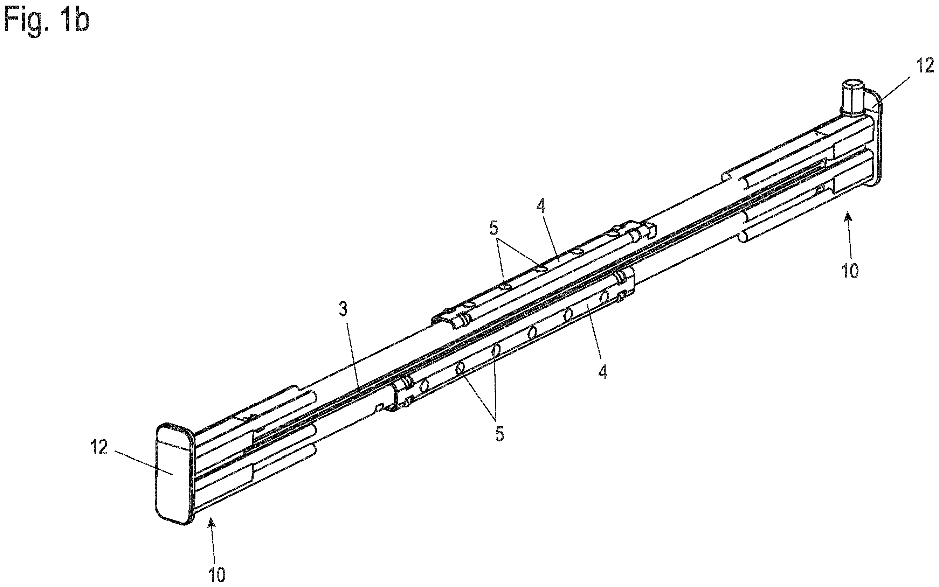

Die Auszugsführung ist in der Fig. 1a in einer isometrischen Gesamtdarstellung in einem eingefahrenen Zustand wiedergegeben. Die Darstellungen der Fig. 1b bis 1d sind grundsätzlich im Hinblick auf den Blickwinkel analog, jedoch sind sukzessive mehr Komponenten der Auszugsführung entfernt, um Einblick in den inneren Aufbau der Auszugsführung zu erhalten.

Wie zunächst Fig. 1a zeigt, umfasst die Auszugsführung eine Korpusschiene 1 sowie eine Laufschiene 2, die oberhalb der Korpusschiene 1 angeordnet ist und gegenüber dieser verschiebbar geführt ist. Beim Einbau in ein Mikrowellengargerät ist die Korpusschiene 1 durch hier nicht sichtbare Montagemittel, beispielsweise Montagewinkel, an einer Seite eines Garraums montiert. Auf die Laufschiene 2 wird ein Gargutträger aufgelegt, der beispielsweise über den in Fig. 1a sichtbaren Bolzen 21, der mit der Laufschiene 2 verbunden ist, fixiert wird. Der Gargutträger kann auf diese Weise mit Hilfe der Auszugsführung bei geöffneter Tür des Mikrowellengargeräts aus dem Garraum gezogen werden und ggf. auch von der Auszugsführung abgenommen werden. Stirnseitig sind jeweils Stirnabdeckungen 12 vorgesehen, von denen eine, in den Figuren die rechts wiedergegebene, an der Korpusschiene 1 fixiert ist, wohingegen die in den Figuren links dargestellte an der Laufschiene 2 fixiert ist und sich mit der Laufschiene 2 bewegt.

In der Fig. 1b sind die Laufschiene 2 und die Korpusschiene 1 entfernt. In dieser Figur ist zu erkennen, dass die Auszugsführung als ein Vollauszug ausgebildet ist, der eine Mittelschiene 3 aufweist, die sowohl gegenüber der Korpusschiene 1, als auch gegenüber der Laufschiene 2 verschiebbar ist. Korpus- und Laufschiene 1, 2 sind jeweils als ein nicht geschlossenes quadratisches Profil ausgebildet, das eine teilweise geöffnete Seite aufweist. Diese teilweise geöffneten Seiten der Profile der Korpusschiene 1 und der Laufschiene 2 weisen aufeinander zu, so dass sich die Mittelschiene 3 jeweils bis ins Innere der Korpusschiene 1 und der Laufschiene 2 erstrecken kann. Die Mittelschiene 3 ist über jeweils mindestens einen Wälzkörperkäfig 4, in dem mehrere Wälzkörper 5 gehalten sind, verschiebbar in der Korpusschiene 1 und der Laufschiene 2 geführt.

Die dargestellte Auszugsführung wird dadurch zum Einsatz in einem Mikrowellengargerät geeignet, dass Mittel zur elektrischen Kontaktierung der Schienen untereinander vorhanden sind. Bei Annahme einer ebenfalls elektrisch leitenden Montage der Auszugsführung ist entsprechend die Korpusschiene 1 mit den üblicherweise zudem geerdeten Seitenwänden des Garraums elektrisch verbunden, so dass insgesamt alle Schienen und damit im Wesentlichen für alle von außen zugänglichen Metallkomponenten der Auszugsführung ein Potentialausgleich herrscht.

Auf diese Weise wird verhindert, dass eine Bestrahlung der Auszugsführung mit Mikrowellen zum Aufbau von Ladung an einer Komponente der Auszugsführung führt, die ggf. zu einer (Plasma-) Entladung von dieser Komponente an eine weitere Komponente führt. Eine Aufladung könnte zudem einen Benutzer gefährden, der nach dem Öffnen der Tür des Mikrowellengargeräts die Auszugsführung berührt. Eine Erdung kann zudem dazu führen, dass die Mikrowellen an den geerdeten Komponenten Wellenknoten ausbilden und im Wesentlichen keine Energie durch die Mikrowellen an die geerdeten Komponenten übertragen wird.

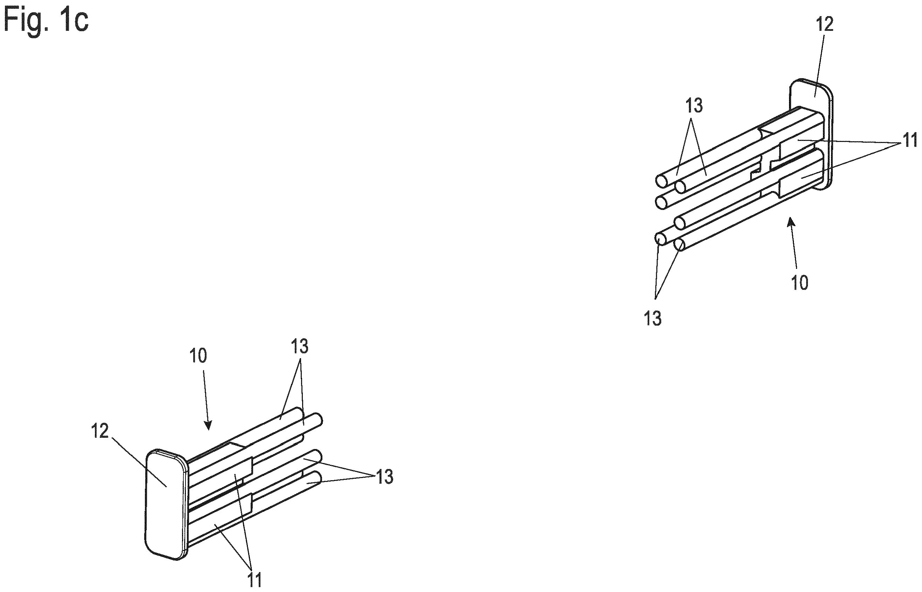

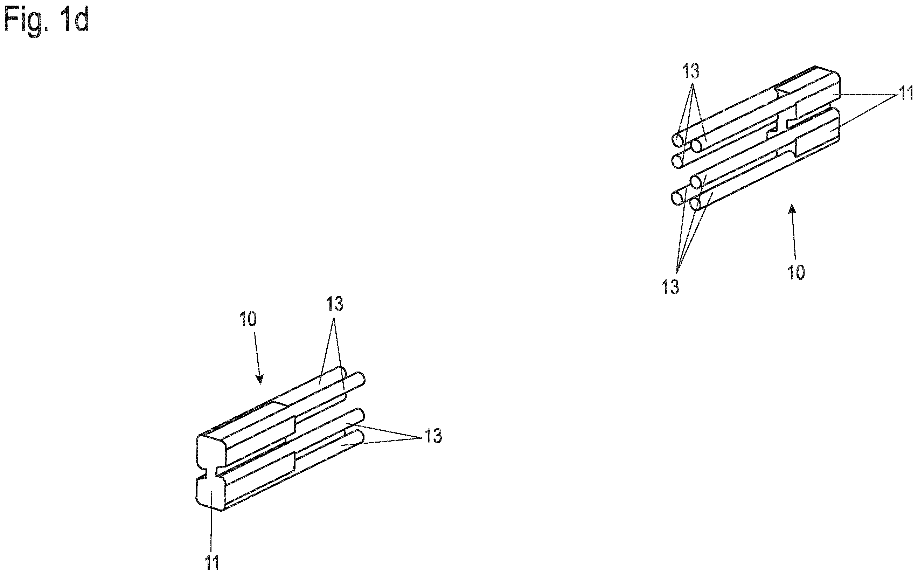

Als Mittel zur elektrischen Kontaktierung der Korpus-, Mittel- und Laufschienen 1, 2, 3 ist bei dem nicht erfindungsgemäßen Beispiel der Fig. 1a-1d an jeder Seite der Auszugsführung ein Endstopfen 10 angeordnet. Diese Endstopfen 10 sind in der Fig. 1c separat und in der Fig. 1d ohne die bereits genannten Stirnabdeckungen 12 wiedergegeben.

Die Endstopfen 10 weisen jeweils einen Grundkörper 11 auf, der die Stirnabdeckung 12 trägt und der mit Ausnehmungen versehen ist, in die Kontaktstäbe 13 eingesetzt sind. Dabei kann der Grundkörper auch einteilig mit der Stirnabdeckung ausgeführt sein.

Die Grundkörper 11 sind dabei so geformt, dass sie mit ihrem äußeren Profil in die Endbereiche der Korpus- bzw. Laufschienen 1, 2 möglichst passgenau eingeschoben sind. Jeweils eine der Schienen ist mit einem der Grundkörper 11 verbunden, insbesondere durch eine (Punkt-) Verschweißung oder Verprägung. Auf diese Weise wird erreicht, dass der eine Endstopfen 10 mit der Korpusschiene 1 und der andere Endstopfen 10 mit der Laufschiene 2 fest verbunden ist.

Ausgehend von den Grundkörpern 11 ragen die Kontaktstäbe 13 in die Korpusschiene 1 bzw. die Laufschiene 2 hinein und kontaktieren die Korpusschiene 1, die Laufschiene 2 an den Innenseiten ihres jeweiligen Profils und die Mittelschiene 3 an deren Außenseite. Im gezeigten Beispiel sind sechs Kontaktstäbe 13 an jedem der Grundköper vorhanden, die sich in zwei Gruppen zu je drei Kontaktstäben 13 aufteilen lassen, eine obere und eine untere Gruppe. Die Kontaktstäbe 13 der oberen Gruppe stellen eine Verbindung zwischen der Laufschiene 2 und der Mittelscheine 3 her und die Kontaktstäbe 13 der unteren Gruppe verbinden die Mittelscheine 3 mit der Korpusschiene 1.

Die Kontaktstäbe 13 sind vorteilhaft aus einem elektrisch gut leitenden Material, beispielsweise einem Metall, bevorzugt Kupfer, Bronze, Messing oder auch Stahl ausgebildet. Auch andere elektrisch gut leitende Materialien können eingesetzt werden, beispielsweise Graphit. Ebenfalls ist es möglich, leitfähige Kunststoffe für die Kontaktstäbe 13 zu verwenden, z.B. leitfähiges POK, PP, TPU und/oder PEEK.

Die Kontaktstäbe 13 können ausschließlich aus den genannten Materialien hergestellt sein, so dass sie mit der Oberfläche dieser Materialien die Schienen kontaktieren. Es ist jedoch auch denkbar, die Kontaktstäbe 13 mit einem leitfähigen Schmiermittel oder einer leitfähigen Beschichtung zu versehen, die gegenüber den genannten Materialien zu einem großflächigeren Kontakt führen kann. Auch ist es denkbar, eine Oberfläche der Kontaktstäbe 13 durch ein Gestrick oder eingearbeitete Borsten oder Bürsten mechanisch flexibel zu gestalten, wodurch sich eine gute Kontaktierung auch bei Toleranzen der seitlichen oder vertikalen Positionierung der Schienen zueinander ergibt. Auch ist es denkbar, die Kontaktstäbe zusammen mit dem Grundkörper als einteiliges Element zu fertigen, das entweder aus einem Materialmix (Mehrkomponenten-Spritzguss) oder nachträglich beschichtete Kontaktstäbe umfasst.

Bei Auszugsführungen in Mikrowellengargeräten ist zudem häufig eine sogenannte Zuhaltefunktion gewünscht, bei der die Auszugsführung in der eingeschobenen und/oder der vollständig ausgezogenen Position leicht fixiert ist. Eine derartige Zuhaltung wird vorteilhafterweise durch die Endstopfen 10 und den mechanischen Kontakt der Korpus-, Mittel- und Laufschiene 1, 2, 3 mit den Kontaktstäben 13 erzielt, z.B. durch einen Reibschluss oder zur Materialschonung der Kontaktstäbe durch eine Zusatzkomponente, z.B. Sperrfeder innerhalb oder außerhalb der Auszugsführung.

Die Kontaktierung der Schienen durch die Kontaktstäbe 13 ist bauartbedingt nur im eingefahrenen oder fast eingefahrenen Zustand der Auszugsführung gegeben. Nur in diesem Zustand allerdings ist die Auszugsführung Mikrowellen ausgesetzt, da in der Regel ein Öffnen der Tür des Mikrowellengargeräts, das Vorrausetzung für das Ausfahren der Auszugsführungen ist, zu einem Abschalten der Mikrowellenquelle führt.

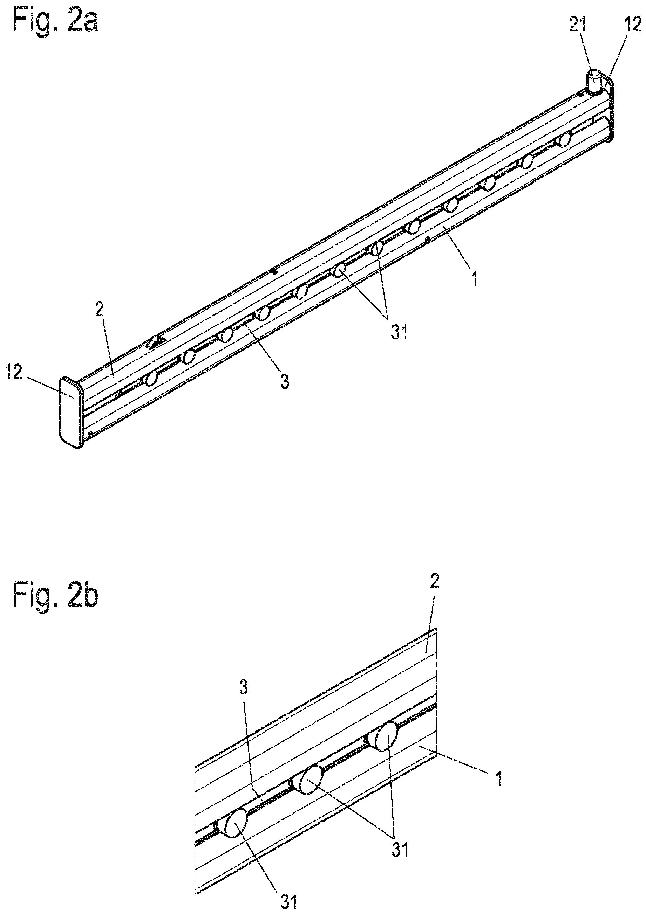

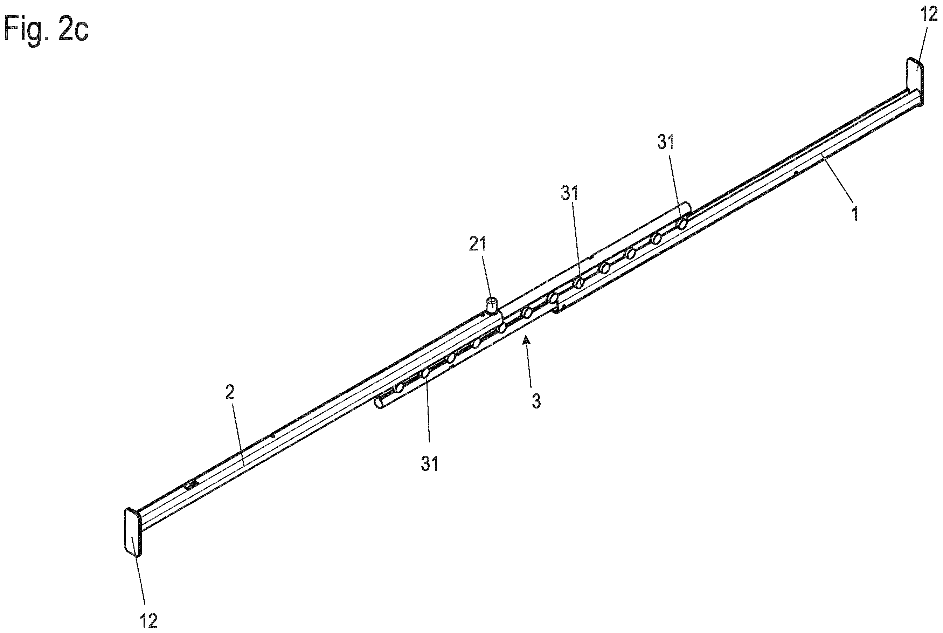

In den Fig. 2a-2c ist ein zweites Beispiel einer nicht erfindungsgemäßen Auszugsführung dargestellt. Fig. 2a zeigt die Auszugsführung in analoger Art und Weise wie Fig. 1a in einer isometrischen Gesamtansicht im eingefahrenen Zustand. Fig. 2b zeigt einen Ausschnitt der Auszugsführung vergrößert. Fig. 2c schließlich zeigt die Auszugsführung in einer isometrischen Gesamtansicht in einem ausgefahrenen Zustand.

In den Fig. 2a-2c kennzeichnen gleiche Bezugszeichen gleiche oder gleichwirkende Elemente wie in den Fig. 1a-1d.

Bezüglich des Grundaufbaus ist die Auszugsführung des zweiten Beispiels mit der des ersten Beispiels vergleichbar. Wiederum ist die Auszugsführung als Vollauszug ausgebildet, wobei eine Korpusschiene 1 gegenüber einer Mittelschiene 3 und diese gegenüber einer Laufschiene 2 linear verfahrbar gelagert sind. Die Lagerung kann wiederum über hier nicht sichtbare Wälzkörperkäfige mit Wälzkörpern erfolgen.

Die Korpusschiene 1 wird an einer Seitenwand im Garraum des Mikrowellengargeräts montiert. Ein Gargutträger kann auf die Laufschiene 2 aufgelegt werden und ist in gleicher Weise wie beim ersten Beispiel durch den Bolzen 21 abnehmbar fixiert. Stirnabdeckungen 12 decken die Auszugsführung stirnseitig ab, wobei wiederum eine (in den Figuren die rechte) der Stirnabdeckungen 12 an der Korpus- und die andere (in den Figuren die linke) der Stirnabdeckungen 12 an der Laufschiene 2 befestigt ist. Im gezeigten Beispiel können die Stirnabdeckungen 12 unmittelbar an den Laufschienen befestigt sein oder über Stopfen, die in jeweils eine der Laufschienen eingesetzt sind.

Als Mittel zur Kontaktierung der Korpus-, Mittel- und Laufschiene 1, 3, 2 untereinander sind beim zweiten Beispiel Kontaktrollen 31 an der Mittelschiene 3 drehbar gelagert. Die Kontaktrollen 31 sind aus einem elektrisch leitfähigen Material gebildet oder weisen ein solches auf, wobei auf die Materialaufzählung verwiesen wird, die beim ersten Beispiel in Zusammenhang mit den Kontaktstäben 13 gegeben ist. Insbesondere ist auch hier eine Ausbildung unmittelbar aus einem festen, jedoch ggf. elastischen Material denkbar, oder auch eine Ausbildung mit einem festen (harten) Kern, der von einem komprimierbaren Material, beispielsweise einem Gestrick- oder Gewirk- oder einem Borsten- bzw. Bürstenrand oder einem elektrisch leitenden Kunststoff umgeben ist. Dieses Umgeben kann sich insbesondere auf eine umfangseitige Lauffläche der Kontaktrollen 31 beziehen.

Die Kontaktrollen 31 sind dabei bevorzugt an hier nicht sichtbaren und von der Mittelschiene 3 abstehenden Achsen befestigt, wobei die Befestigung auch über eine kippbare oder federnde Lagerung erfolgen kann, um einen Höhenausgleich der Kontaktrollen 31 zu ermöglichen. Bei einer federnden Lagerung der Kontaktrollen 31 kann bevorzugt vorgesehen sein, dass ein erster Teil der Kontaktrollen 31 federkraftbeaufschlagt gegen die Korpusschiene 1 drückt, wohingegen ein weiterer Teil der Kontaktrollen 31 federkraftbeaufschlagt gegen die Laufschiene 2 drückt.

Durch die Mehrzahl der Kontaktrollen 31 werden die Korpusschiene 1 und die Laufschiene 2 entweder unmittelbar oder mittelbar über die Mittelschiene 3 miteinander elektrisch verbunden.

Grundsätzlich würde für eine Kontaktierung der Schienen untereinander im geschlossenen Zustand der Auszugsführung eine einzelne Kontaktrolle 31 ausreichend sein. Bevorzugt sind jedoch mindestens zwei und besonders bevorzugt eine Mehrzahl von Kontaktrollen 31 vorgesehen, um eine gute und sichere Kontaktierung zu erreichen. Insbesondere sind Kontaktstellen im Abstand von einigen Zentimetern (cm) vorgesehen. Die eingesetzten Mikrowellen haben in der Regel eine Wellenlänge von etwa 12 cm. Aufladungen durch eine Antennenwirkung werden wirksam unterbunden, wenn nicht miteinander kontaktierte Abschnitte der Schienen nicht länger als etwa einen Viertel der Wellenlänge der Mikrowellen sind, also etwa 3 cm.

Wenn die Kontaktrollen 31 entlang der im wesentlichen gesamten Längserstreckung der Mittelschiene 3 angeordnet sind, ist eine Kontaktierung der der Schienen untereinander zudem auch im vollständig ausgezogenen Zustand der Auszugsführung gegeben, wie dieses in Fig. 2c ersichtlich ist.

Auch beim zweiten Beispiel der Fig. 2a-2c kann ein Zuhaltemechanismus realisiert sein. Dabei ist es möglich, den Zuhaltemechanismus über die Kontaktrollen 31 umzusetzen, so dass diese vorteilhaft sowohl der elektrischen Kontaktierung, als auch der Zuhaltung dienen. Eine Zuhaltung kann beispielsweise auch dadurch umgesetzt sein, dass entlang der Laufflächen, auf denen die Kontaktrollen 31 an der Korpusschiene 1 bzw. der Laufschiene 2 abrollen, Ausbuchtungen ausgebildet sind, z.B. in Form von Einprägungen. Die Einprägungen sind so positioniert, dass zumindest eine der Kontaktrollen 31 im geschlossenen (und ggf. auch zusätzlich im ausgezogenen) Zustand der Auszugsführung in einer solchen Ausprägung positioniert ist, wodurch die Auszugsführung leicht in dieser Stellung fixiert wird. Besonders bevorzugt ist die entsprechende Kontaktrolle in Richtung der Ausbuchtung federkraftbeaufschlagt, wodurch sich eine leichte Einrast-Funktion für diese Position ergibt.

In beiden dargestellten Beispielen kann in einer Weiterbildung die Stirnabdeckung 12 mit einem elektrisch nicht leitenden Material beschichtet oder belegt sein, beispielsweise einem keramischen Material. Dieses elektrisch nicht leitende Material dient als Abstandshalter zwischen der Laufschiene 2 und einer Rückwand des Garraums und/oder einer Tür des Mikrowellengargeräts. Selbst wenn sich hohe elektrische Potentiale an der Auszugsführung und/oder der Tür aufbauen, werden Funkendurchschläge durch diese Weise vermieden. Auch die genannte Zuhaltung kann dazu dienen, dass ein Abstand zwischen beispielsweise der Tür des Mikrowellengargeräts und der vorderen Stirnabdeckung 12 eingehalten wird, wodurch (Funken-) Durchschläge verhindert werden.

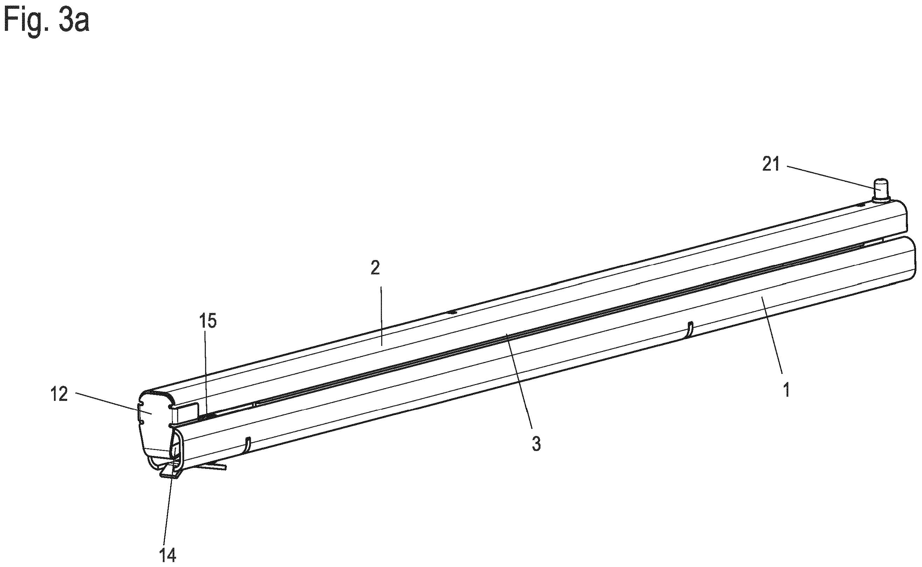

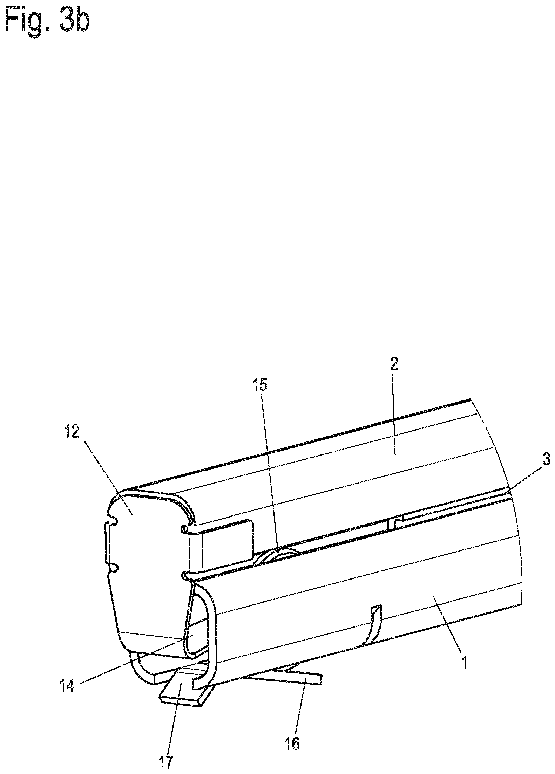

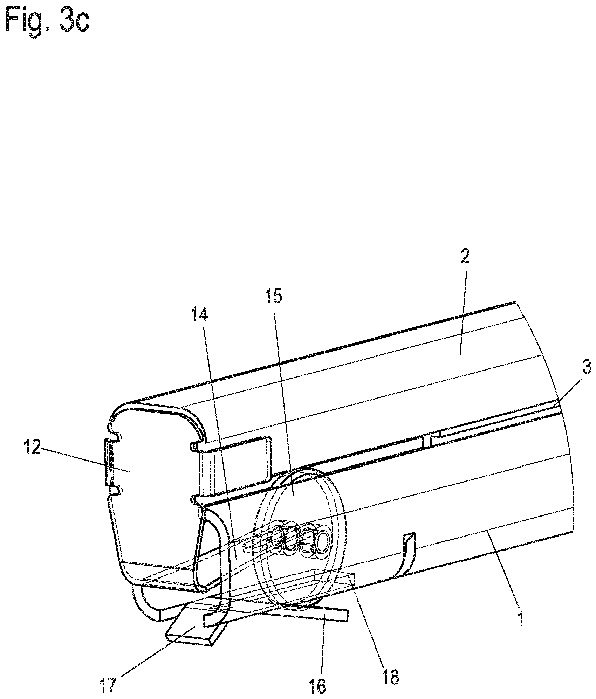

In den Fig. 3a-3c ist ein Ausführungsbeispiel einer erfindungsgemäßen Auszugsführung dargestellt. Fig. 3a zeigt die Auszugsführung in vergleichbarer Weise wie Fig. 1a in einer isometrischen Gesamtansicht in einem eingefahrenen Zustand. Fig. 3b zeigt einen vorderen Abschnitt der Auszugsführung vergrößert. In Fig. 3c ist der gleiche Abschnitt wie in Fig. 3b mit teiltransparenten Elementen dargestellt, so dass Einblick in den inneren Aufbau der Auszugsführung gewährt ist.

In den Fig. 3a-3c kennzeichnen gleiche Bezugszeichen wiederum gleiche oder gleichwirkende Elemente wie in den vorangehenden Figuren. Bezüglich des Grundaufbaus ist die Auszugsführung dieses Ausführungsbeispiels mit den zuvor gezeigten nicht erfindungsgemäßen Beispielen vergleichbar. Die Auszugsführung ist ebenso als Vollauszug ausgebildet, wobei eine Korpusschiene 1 gegenüber einer Mittelschiene 3 und diese gegenüber einer Laufschiene 2 verfahrbar gelagert ist. Die Lagerung erfolgt über hier nicht sichtbare Wälzkörperkäfige mit Wälzkörpern.

Bei an einer Seitenwand im Gargerät montierter Korpusschiene 1 wird ein Gargutträger wiederum auf die Laufschiene 2 aufgelegt und ist wie bei den zuvor gezeigten Beispielen durch den Bolzen 21 der Laufschiene 2 fixiert.

Als Mittel zur Kontaktierung ist bei diesem Ausführungsbeispiel mindestens eine Kontaktrolle 15 vorgesehen, die über einen federnden Abschnitt 14 an der Stirnabdeckung 12 befestigt und drehbar gelagert ist. Wie die Kontaktrollen 31 des zweiten Beispiels ist auch die Kontaktrolle 15 dieses Ausführungsbeispiels aus einem elektrisch leitfähigen Material hergestellt oder weist ein solches auf. Die Kontaktrolle 15 ist über ihre Lagerung und den federnden Abschnitt 14 der Stirnabdeckung 12 mit der Laufschiene 2 elektrisch verbunden. Die Stirnabdeckung 12 einschließlich des federnden Abschnitts 14 kann beispielsweise aus einem metallischen Blech in einem Stanz-Biegeverfahren gefertigt sein und über eine Punktschweißverbindung mit der Laufschiene 2 verbunden sein.

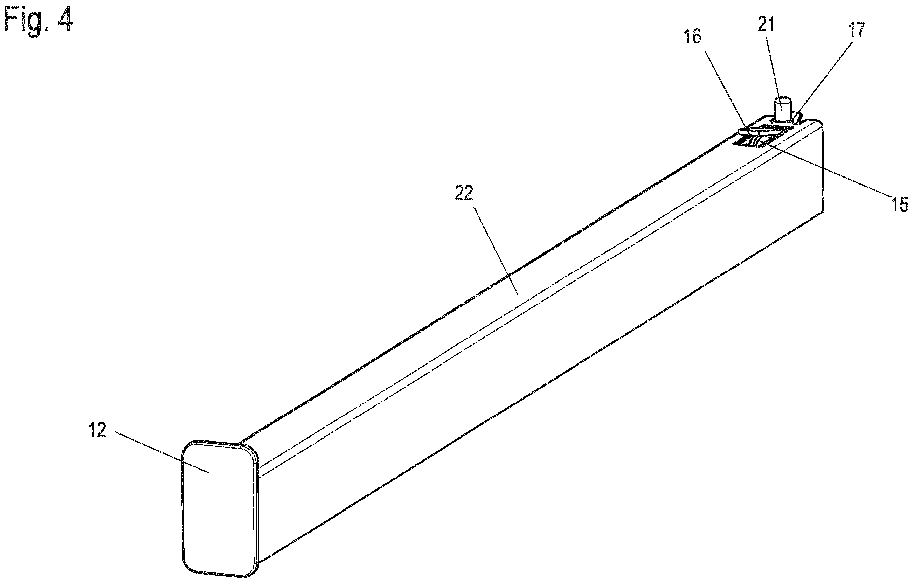

Wie die Fig. 3a-3d zeigen, ragt die Kontaktrolle 15 im geschlossenen Zustand der Auszugsführung in den vorderen Bereich der Korpusschiene 1 hinein und kontaktiert diese federkraftbeaufschlagt an ihrem unteren, horizontalen Abschnitt. Da sich die Mittelschiene 3 in der Regel nicht über die gesamte Länge der Korpusschiene 1 bzw. der Laufschiene 2 erstreckt, ist in dem gezeigten vorderen Bereich der Korpusschiene 1 ein Freiraum, in dem die Laufrolle 15 einfahren kann. Ein vergleichbarer Freiraum existiert in einem hinteren Bereich der Laufschiene, in dem die Kontaktrolle 15 alternativ oder zusätzlich ebenso angeordnet sein könnte. Ein Ausführungsbeispiel mit einer Kontaktrolle 15 im hinteren Bereich ist in Fig. 4 dargestellt.

Neben der Funktion der elektrischen Kontaktierung der Laufschiene 2 mit der Korpusschiene 1 zumindest im eingefahrenen Zustand der Auszugsführung dient die Kontaktrolle 15 im dargestellten Ausführungsbeispiel zusätzlich der Umsetzung eines Zuhalte- und/oder Selbsteinzugsmechanismus sowie einer Anschlagsfunktion.

Zu diesem Zweck ist im vorderen Bereich der Korpusschiene 1 die Lauffläche, auf der die Kontaktrolle 15 läuft, als eine Auflaufschräge 16 ausgebildet. Aufgrund der Federkraft, mit der der Federabschnitt 14 die Laufrolle 15 nach unten in Richtung der Korpusschiene 1 drückt, führt die Auflaufschräge 16 zu einer automatischen Bewegung der Laufschiene 2 in die vollständig eingefahrene Position. Im dargestellten Beispiel ist die Auflaufschräge 16 in einem Stanz-Biegeprozess integral aus dem Material der Korpusschiene 1 ausgebildet. Sie weist eine Länge im Bereich von einem bis einigen cm auf und eine Neigung im Bereich vom einigen Grad gegenüber dem sonstigen Verlauf der Korpusschiene 1.

Beim Einfahren der Laufschiene 2 aus einer herausgefahrenen Stellung der Auszugsführung ist die Kontaktrolle 15 aufgrund des Federabschnitts 14 ausgefedert. Beim Annähern der Kontaktrolle 15 an die Korpusschiene 1 muss somit beim Einfahren der Korpusschiene zunächst Kraft aufgebracht werden, um die Kontaktrolle 15 mit ihrer Lauffläche auf die Höhe des unteren horizontalen Abschnitts der Korpusschiene 1 zu bringen. Um diesen Vorgang zu erleichtern, ist eine weitere Auflaufschräge 17 mit entgegengesetzter Steigung wie die der Auflaufschräge 16 im vorderen Bereich der Korpussschiene 1 ausgebildet. Nachdem die Kontaktrolle 15 beim Einfahren der Korpusschiene 2 mit Hilfe der weiteren Auflaufschräge 17 angehoben ist, setzt der Selbsteinzugsmechanismus durch das Abrollen der Kontaktrolle 15 auf der Auflaufschräge 16 ein. Die Einzugsbewegung endet darauf entweder durch Anschlagen der Kontaktrolle an einem Endanschlag 18, hier ausgebildet als Vorsprung der Ausstanzung für die Auflaufschräge 16, oder durch Anschlagen der Stirnabdeckung an der gegenläufigen Führungsschiene oder durch interne Anschläge der Auszugsführung, beispielsweise über die Wälzkörper.

In Fig. 4 ist ein weiteres Ausführungsbeispiel einer Führung in einer isometrischen Gesamtansicht dargestellt, die ebenfalls eine Kontaktrolle 15 einsetzt, um Korpus bzw. Laufschiene der Auszugsführung miteinander elektrisch zu verbinden.

Im Unterschied zu dem zuvor gezeigten Ausführungsbeispiel ist bei dieser Auszugsführung eine im Querschnitt u-förmige Abdeckung 22 über die Laufschiene gestülpt, die mit ihren Seiten auch die Korpusschiene und insbesondere einen zwischen Lauf- und Korpusschiene üblicherweise vorliegenden Spalt abdeckt und damit die Schienen der Auszugsführung vor Mikrowellenstrahlung abschirmt.

Im Unterschied zum Ausführungsbeispiel der Fig.3a-3c ist die Kontaktrolle 15 in diesem Fall im hinteren Bereich der Auszugsführung angeordnet. Sie ist federnd an der Korpusschiene angeordnet, wobei die Auflaufschrägen 16, 17 entsprechend an der Laufschiene ausgebildet sind. Im Bereich der Auflaufschrägen 16, 17 ist die Abdeckung 22 ausgespart.

### Bezugszeichenliste

- 1: Korpusschiene
- 2: Laufschiene
- 21: Bolzen
- 22: Abdeckung
- 3: Mittelschiene
- 31: Kontaktrolle
- 4: Wälzkörperkäfig
- 5: Wälzkörper

- 10: Endstopfen
- 11: Grundkörper
- 12: Stirnabdeckung
- 13: Kontaktstab
- 14: Federabschnitt
- 15: Kontaktrolle
- 16: Auflaufschräge
- 17: Auflaufschräge
- 18: Endanschlag

## Patentansprüche

1. Auszugsführung für ein Mikrowellengargerät oder einen industriellen Wärmeofen, aufweisend eine Korpusschiene (1) und eine relativ dazu bewegbare Laufschiene (2) zur Ablage eines Trägers, wobei Mittel zur elektrischen Kontaktierung der Laufschiene (2) mit der Korpusschiene (1) vorhanden sind, die mindestens eine Kontaktrolle (15) umfassen, die an der Korpusschiene (1) und/oder der Laufschiene (2) drehbar gelagert ist und die jeweils andere der Schienen kontaktiert und so angeordnet ist, dass sie bei eingefahrener Auszugsführung in die jeweils andere Schiene einfährt, **dadurch gekennzeichnet, dass** in dem Bereich der anderen Schiene, in die die mindestens eine Kontaktrolle (15) einfährt, mindestens eine Auflaufschräge (16, 17) angeordnet ist, und dass die mindestens eine Kontaktrolle (15) federnd gelagert ist, wodurch die Kontaktrolle (15) zusätzlich der Umsetzung eines Zuhalte- und/oder Selbsteinzugsmechanismus dient.

2. Auszugsführung nach Anspruch 1, ausgebildet als Vollauszugsführung mit einer Mittelschiene (3), die relativ zu der Korpusschiene (1) und der Laufschiene (2) bewegbar ist.

3. Auszugsführung nach Anspruch 2, bei der die Mittel zur elektrischen Kontaktierung auch die Laufschiene (2) und/oder die Korpusschiene (1) elektrisch mit der Mittelschiene (3) verbinden.

4. Auszugsführung nach einem der Ansprüche 1 bis 3, bei der die Mittel zur elektrischen Kontaktierung der Korpusschiene (1), der Laufschiene (2) und ggf. der Mittelschiene (3) eine elektrische Verbindung zumindest in einer eingefahrenen Stellung der Auszugsführung herstellen.

5. Auszugsführung nach einem der Ansprüche 1 bis 4, bei der die Kontaktrolle (15) zusätzlich der Umsetzung einer Anschlagsfunktion dient.

6. Auszugsführung nach einem der Ansprüche 1 bis 5, bei der die mindestens eine Kontaktrolle (15) mit Spiel behaftet gelagert ist.

7. Auszugsführung nach einem der Ansprüche 1 bis 6, bei der die mindestens eine Kontaktrolle (15) ein elektrisch leitendes Material, insbesondere ein Metall und/oder Graphit und/oder einen elektrisch leitenden Kunststoff, aufweist.

8. Auszugsführung nach Anspruch 7, bei der die mindestens ein Kontaktrolle einen Kern aufweist, der von dem elektrisch leitenden Material ganz oder teilweise umgeben ist.

9. Auszugsführung nach Anspruch 8, bei der das elektrisch leitende und nachgiebige Material ein Gestrick oder Gewirk aus leitenden Fäden ist.

10. Auszugsführung nach Anspruch 9, bei der das elektrisch leitende und nachgiebige Material leitende Bürsten oder Borsten sind.

11. Auszugsführung nach Anspruch 10, bei der das elektrisch leitende und nachgiebige Material ein elektrisch leitender Kunststoff ist.

12. Auszugsführung nach einem der Ansprüche 1 bis 11, bei der die mindestens eine Kontaktrolle (31) so ausgebildet ist, dass sie die Auszugsführung durch Reib- und/oder Formschluss in einer eingefahrenen Stellung hält.

13. Auszugsführung nach einem der Ansprüche 1 bis 12, bei der mindestens eine Stirnabdeckung (12) an einem Endbereich der Korpusschiene (1) und/oder der Laufschiene (2) ausgebildet oder befestigt ist, die mit einem elektrisch nicht leitenden Material beschichtet oder belegt ist, insbesondere einem keramischen Material.

14. Mikrowellengargerät oder industrieller Wärmeofen mit mindestens einer Auszugsführung gemäß einem der Ansprüche 1 bis 13.

## Claims

1. Pull-out guide for a microwave cooking appliance or an industrial oven, having a body rail (1) and a running rail (2), which can be moved relative thereto, for depositing a carrier, wherein means are provided for electrically contacting the running rail (2) with the body rail (1) that comprise at least one contact roller (15), which is rotatably mounted on the body rail (1) and/or the running rail (2), and which contacts the respective other of the rails, and which is arranged in such a way that it moves into the respective other rail when the pull-out guide is retracted, **characterized in that** at least one ramp (16, 17) is arranged in the area of the other rail into which the at least one contact roller (15) enters, and that the contact roller (15) is mounted resiliently, thereby additionally serving to implement a guard locking and/or self-closing mechanism.

2. Pull-out guide according to claim 1, designed as a full-extension pull-out guide having a middle rail (3) which is movable relative to the body rail (1) and the running rail (2).

3. Pull-out guide according to claim 2, in which the means for electrical contact also electrically connect the running rail (2) and/or the body rail (1) to the middle rail (3).

4. Pull-out guide according to one of claims 1 to 3, in which the means for electrical contacting of the body rail (1), the running rail (2) and optionally the middle rail (3) establish an electrical connection at least in one retracted position of the pull-out guide.

5. Pull-out guide according to one of claims 1 to 4, in which the contact roller (15) additionally serves to implement a stop function.

6. Pull-out guide according to one of claims 1 to 5, in which the at least one contact roller (15) is mounted with play.

7. Pull-out guide according to one of claims 1 to 6, in which the at least one contact roller (15) has an electrically conductive material, in particular a metal and/or graphite and/or an electrically conductive plastic.

8. Pull-out guide according to claim 7, in which in which the at least one contact roller has a core which is completely or partially surrounded by the electrically conductive material.

9. Pull-out guide according to claim 8, in which the electrically conductive and yielding material is a knitted or crocheted fabric of conductive threads.

10. Pull-out guide according to claim 9, in which the electrically conductive and yielding material is conductive brushes or bristles.

11. Pull-out guide according to claim 10, in which the electrically conductive and yielding material is an electrically conductive plastic.

12. Pull-out guide according to one of claims 1 to 11, in which the at least one contact roller (31) is designed in such a way that they hold the pull-out guide in a retracted position by frictional and/or positive locking.

13. Pull-out guide according to one of claims 1 to 12, in which at least one front cover (12) is formed or fixed to an end region of the body rail (1) and/or the running rail (2), which is coated or covered with an electrically non-conductive material, in particular a ceramic material.

14. Microwave cooking appliance or industrial oven having at least one pull-out guide according to one of claims 1 to 13.

## Revendications

1. Guide d'extraction pour un appareil de cuisson à micro-ondes ou un four à réchauffer industriel, présentant un rail de corps (1) et un rail de glissement (2) mobile par rapport à celui-ci sur lequel poser un support, dans lequel sont prévus des moyens de mise en contact du rail de glissement (2) avec le rail de corps (1) comprenant au moins un galet de contact (15) qui est supporté avec possibilité de rotation sur le rail de corps (1) et/ou le rail de glissement (2) et vient en contact avec l'autre rail et qui est disposé de telle manière qu'il rentre dans l'autre rail quand le guide d'extraction est rétracté, **caractérisé en ce qu'**au moins un biseau d'approche (16, 17) est disposé dans la partie de l'autre rail dans laquelle rentre l'au moins un galet de contact (15) et **en ce que** l'au moins un galet de contact (15) est supporté de façon élastique, de sorte que le galet de contact (15) sert en outre à réaliser un mécanisme de rétention et/ou de rétraction automatique.

2. Guide d'extraction selon la revendication 1, réalisé comme un guide d'extraction complète avec un rail intermédiaire (3) mobile par rapport au rail de corps (1) et au rail de glissement (2).

3. Guide d'extraction selon la revendication 2, dans lequel les moyens pour la mise en contact électrique connectent aussi électriquement le rail de glissement (2) et/ou le rail de corps (1) avec le rail intermédiaire (3).

4. Guide d'extraction selon l'une des revendications 1 à 3, dans lequel les moyens pour la mise en contact électrique du rail de corps (1), du rail de glissement (2) et éventuellement du rail intermédiaire (3) établissent une connexion électrique au moins dans une position rétractée du guide d'extraction.

5. Guide d'extraction selon l'une des revendications 1 à 4, dans lequel le galet de contact (15) sert en outre à réaliser une fonction de butée.

6. Guide d'extraction selon l'une des revendications 1 à 5, dans lequel l'au moins un galet de contact (15) est supporté avec un jeu.

7. Guide d'extraction selon l'une des revendications 1 à 6, dans lequel l'au moins un galet de contact (15) comporte un matériau conducteur électrique, en particulier un métal et/ou du graphite et/ou une matière plastique conductrice électrique.

8. Guide d'extraction selon la revendication 7, dans lequel l'au moins un galet de contact comprend un cœur qui est entièrement ou partiellement entouré de matériau conducteur électrique.

9. Guide d'extraction selon la revendication 8, dans lequel le matériau conducteur électrique et souple est un tricot ou un tissu fait de fils conducteurs.

10. Guide d'extraction selon la revendication 9, dans lequel le matériau conducteur électrique et souple est composé de balais ou de soies conducteurs.

11. Guide d'extraction selon la revendication 10, dans lequel matériau conducteur électrique et souple est une matière plastique conductrice électrique.

12. Guide d'extraction selon l'une des revendications 1 à 11, dans lequel l'au moins un galet de contact (31) est conformé de telle manière qu'il retient le guide d'extraction dans une position rétractée par friction et/ou par engagement positif.

13. Guide d'extraction selon l'une des revendications 1 à 12, dans lequel au moins une couverture de façade (12) enduite ou revêtue d'un matériau non conducteur électrique, en particulier d'un matériau céramique, est formée ou fixée sur une partie d'extrémité du rail de corps (1) et/ou du rail de glissement (2).

14. Appareil de cuisson à micro-ondes ou four à réchauffer industriel muni d'au moins un guide d'extraction selon l'une des revendications 1 à 13.
